# EUROPEAN PATENT APPLICATION

(11) **EP 4 241 872 A1**
(43) Date of publication of application: **13.09.2023**
(21) Application number: 21889196.8
(22) Date of filing: 02.11.2021
(51) Int. Cl.: B01D 53/26, B01D 53/28, F16L 59/02, B01J 20/26, B01J 20/34

(54) **THERMAL INSULATOR**

(30) Priority: 06.11.2020 JP 2020185507
(71) Applicant: JTEKT Corporation, Kariya-shi, Aichi-ken, 448-8652 (JP); National University Corporation Tokai National Higher Education and Research System, Nagoya-shi, Aichi 464-8601 (JP)
(72) Inventor: SAITO Toshiyuki, Kariya-shi, Aichi 448-8652 (JP); RYUGO Kenichi, Kariya-shi, Aichi 448-8652 (JP); NAKAI Motoo, Kariya-shi, Aichi 448-8652 (JP); NAKANISHI Kazuki, Nagoya-shi, Aichi 464-8601 (JP)
(74) Representative: TBK
(86) International application number: PCT/JP2021/040405
(87) International publication number: WO 2022/097643

(57) **Abstract**

The present invention relates to a thermal insulator containing a polymer sorbent that regenerates by desorbing adsorbed moisture, and a thermal insulation material. The thermal insulator of the present invention has the thermal insulation performance and prevents deterioration of the object by repeatedly absorbing liquid water between the object to be thermally insulated and the thermal insulator to reduce and prevent retention of water droplets between an object to be thermally insulated and a thermal insulator.

## Description

### TECHNICAL FIELD

The present disclosure relates to a thermal insulator.

### BACKGROUND ART

A technique of disposing a thermal insulator on an outer circumference of a pipe is known (for example, Patent Literature 1).

### CITATION LIST

### PATENT LITERATURE

Patent Literature 1: JP2000-240116A

### SUMMARY OF INVENTION

### TECHNICAL PROBLEM

When retention of water droplets between an object to be thermally insulated and a thermal insulator occurs due to dew condensation, the object may deteriorate due to corrosion, for example.

### SOLUTION TO PROBLEM

The present disclosure can be implemented in the following forms.
(1) One aspect of the present disclosure provides a thermal insulator. The thermal insulator includes: a polymer sorbent that regenerates by desorbing adsorbed moisture; and a thermal insulation material.
   The thermal insulator of this aspect has the thermal insulation performance and allows for preventing deterioration of the object by repeatedly absorbing liquid water between the object to be thermally insulated and the thermal insulator to reduce and prevent retention of water droplets between an object to be thermally insulated and a thermal insulator.
(2) In the thermal insulator of the above aspect, at least one selected from the group consisting of the polymer sorbent and the thermal insulation material may be granular.
   The thermal insulator of this aspect allows for improving a filling rate of the thermal insulator, improving the thermal insulation performance and preventing dew condensation to more reliably prevent deterioration of the object.
(3) In the thermal insulator of the above aspect, the polymer sorbent may have a regeneration temperature at which the adsorbed moisture is desorbed of 40°C or higher and 100°C or lower.
   The thermal insulator of this aspect allows for providing a thermal insulator suitable for thermally insulating an object whose temperature change is 100°C or less.
(4) In the thermal insulator of the above aspect, the polymer sorbent may contain a crosslinked polyacrylate.
   According to the thermal insulator of this aspect, known materials can be used to provide a thermal insulator suitable for thermally insulating an object whose temperature change is 100°C or less.
(5) In the thermal insulator of the above aspect, a volume ratio of the polymer sorbent to the thermal insulator may be less than 1%.
   The thermal insulator of this aspect allows for providing a thermal insulator capable of reducing or preventing deterioration of an object while having sufficient thermal insulation performance.
(6) In the thermal insulator of the above aspect, the thermal insulation material may be an aerogel having water repellency. The thermal insulator of this aspect allows for smoothly guiding liquid water to a polymer sorbent and improving moisture absorption performance of the thermal insulator.
(7) In the thermal insulator of the above aspect, the aerogel may contain polymethylsilsesquioxane.

The thermal insulator of this aspect allows for improving productivity, compared to a silica aerogel produced by supercritical drying.

The present disclosure can also be implemented in various forms other than the thermal insulator. For example, it can be implemented in the form of a thermally insulating material, a thermal insulation layer, a circulation pipe including a thermal insulator, a method for producing a thermal insulator, and the like.

### BRIEF DESCRIPTION OF DRAWINGS

FIG. 1 is a diagram illustrating a configuration of a thermal insulator according to a first embodiment.
FIG. 2 is a graph showing isothermal adsorption characteristics of a polymer sorbent at 20°C.
FIG. 3 is a graph showing a regeneration temperature of the polymer sorbent.

### DESCRIPTION OF EMBODIMENTS

### A. First Embodiment:

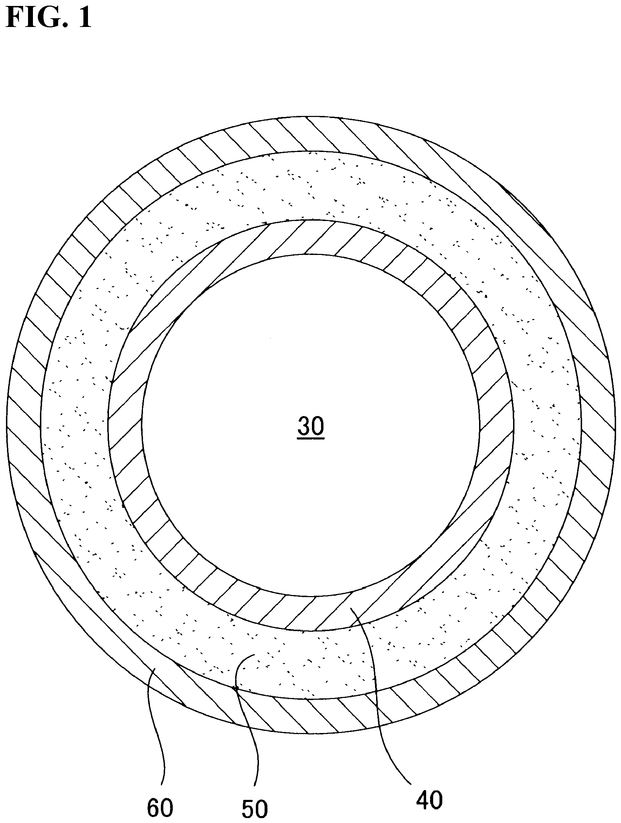

FIG. 1 is a diagram illustrating a configuration of a thermal insulator 50 according to the present embodiment. FIG. 1 shows a cross section of a circulation pipe 40 to which the thermal insulator 50 is mounted. As shown in FIG. 1, the thermal insulator 50 according to the present embodiment is provided to cover an outer circumference of the circulation pipe 40. A protective layer 60 is provided on an outer circumference of the thermal insulator 50.

The circulation pipe 40 includes a flow path 30 therein. The circulation pipe 40 has a cylindrical shape and is made of a metal such as cast iron or stainless steel. The circulation pipe 40 is used for industrial purposes and is connected to a device (not shown) having a heat source such as an engine or a boiler. A fluid whose temperature has been raised by waste heat generated when the device is in operation flows through the flow path 30. Examples of the fluid include exhaust gases from an engine or a boiler, and refrigerants such as a coolant. In the present embodiment, the temperature of the circulation pipe 40 rises to 70°C when the device is in operation and drops to 35°C when the device is stopped.

The protective layer 60 is, for example, an aluminum sheet. The protective layer 60 is disposed to cover the thermal insulator 50. A space for filling the thermal insulator 50 is defined between the protective layer 60 and the circulation pipe 40. In addition, the protective layer 60 prevents the thermal insulator 50 from being exposed to outside air and prevents liquid water from entering the thermal insulator 50 from the outside. The protective layer 60 may contain glass cloth or the like for reinforcement. The protective layer 60 may be formed of a metal such as cast iron or stainless steel, or a synthetic resin, in addition to an aluminum sheet. The protective layer 60 may be omitted, for example, when the thermal insulator 50 can be molded to an extent that the shape can be sufficiently maintained and when the thermal insulator 50 can be disposed on the outer circumference of the circulation pipe 40 without the protective layer 60. The protective layer 60 may be provided with a through hole that communicates the thermal insulator 50 with the outside in order to release moisture absorbed by the thermal insulator 50.

The thermal insulator 50 reduces or prevents heat transfer from an outer surface of the circulation pipe 40 to the outside. The thermal insulator 50 is disposed on a radially outer side of the circulation pipe 40, that is, disposed to surround the outer circumference of the circulation pipe 40 in a circumferential direction. In the present embodiment, the thermal insulator 50 is formed by filling a space between the circulation pipe 40 and the protective layer 60 with a mixture obtained by mixing a granular thermal insulation material and a granular polymer sorbent in a volume ratio to be described below. In the thermal insulator 50, the filling rate of the thermal insulation material and the polymer sorbent is 80%. Particle diameters of the polymer sorbent and the thermal insulation material in the present embodiment range from several tens of micrometers to several millimeters. The thermal insulator 50 may contain a polymer material such as a resin or glass, in addition to the thermal insulation material and the polymer sorbent. The thermal insulator 50 may be formed by allowing the thermal insulation material and the polymer sorbent to be contained in fibers such as non-woven fabrics or woven fabrics, or may be formed by molding a polymer material containing the thermal insulation material and the polymer sorbent. The thermal insulator 50 in this form can be easily molded while containing the thermal insulation material and the polymer sorbent.

The thermal insulation material is, for example, an aerogel having water repellency. In the present embodiment, an aerogel containing polymethylsilsesquioxane (PMSQ), which is also called an organic-inorganic hybrid aerogel, is used as the thermal insulation material. Polymethylsilsesquioxane (chemical formula: CH₃SiO_{1.5}) is a polymer in which methyltrimethoxysilane (chemical formula: CH₃Si(OCH₃)₃), which is one of organosilicon alkoxides, is crosslinked in a three-dimensional network, and is spherical fine particles of a silicon resin. The polymethylsilsesquioxane aerogel is prepared by wet gel formation by using a liquid phase method such as a sol-gel method, and is further processed into granules in the present embodiment. The polymethylsilsesquioxane aerogel has a thermal conductivity of about 15 mW·m⁻¹·K⁻¹, which is lower than a thermal conductivity (20 mW·m⁻¹·K⁻¹ to 40 mW·m⁻¹·K⁻¹) of a general thermally insulating material. In addition, the polymethylsilsesquioxane aerogel has a methyl group directly bonded to silicon. Thus, it has low surface energy comparable to that of a silicon resin, polydimethylsiloxane (PDMS), and the like, and has high hydrophobicity with a water contact angle of about 150°C. The form of the thermal insulation material is not limited to granules, and may be various forms such as a powder form, a block form, and a plate form.

The polymer sorbent dehumidifies the thermal insulator 50 by sorption. The polymer sorbent is also called a desiccant material. The sorption means a phenomenon in which a water molecule bonds to a hydrophilic polymer chain and the water molecule is trapped while a crosslinked polymer swells and deforms with the crosslinking point as a fulcrum. Further, when the temperature increases, the crosslinked polymer shrinks, and the water molecule sorbed to the crosslinked polymer is desorbed as the crosslinked polymer shrinks, and thereby the polymer sorbent is regenerated. The temperature required for regeneration of the polymer sorbent is hereinafter also referred to as a "regeneration temperature". In the present embodiment, the polymer sorbent contains a water-absorbing polymer made of a crosslinked polyacrylate (NaPAA). The polymer sorbent can be produced by allowing it to be impregnated in a base material, and is further processed into granules in the present embodiment. The form of the polymer sorbent is not limited to granules, and may be a powder form, a block form, and a plate form, or may be various forms such as a fibrous form in which the polymer sorbent is supported on fibers or a honeycomb form in which the polymer sorbent is supported on a base material.

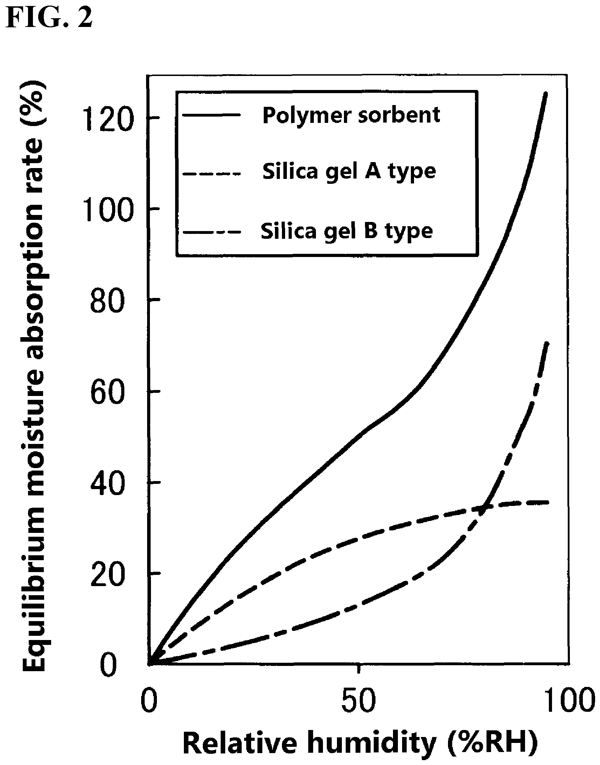

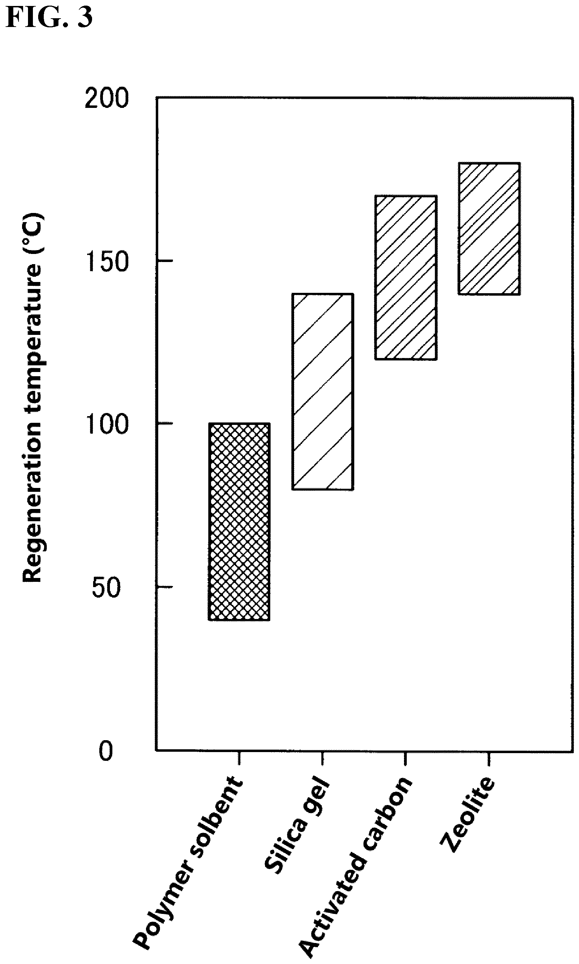

Physical properties of the polymer sorbent contained in the thermal insulator 50 according to the present embodiment will be described with reference to FIG. 2 and FIG. 3. In the present embodiment, the polymer sorbent absorbs moisture by sorption at room temperature, and releases moisture by regeneration at 40°C or higher and 100°C or lower. FIG. 2 is a graph showing isothermal adsorption characteristics of the polymer sorbent at 20°C. A vertical axis indicates equilibrium moisture absorption rate and a horizontal axis indicates relative humidity. The equilibrium moisture absorption rate is a water absorption amount in terms of weight at the relative humidity under static conditions. FIG. 2 also shows isothermal adsorption characteristics of silica gel A type and silica gel B type as comparative examples. The crosslinked polyacrylate contained in the polymer sorbent has intermolecular crosslinks and a carboxylic acid group in side chains. The carboxylic acid group is a hydrophilic group, and when it bonds to water vapor, the crosslinked polymer swells with the crosslinking point as a fulcrum to cause sorption. As a result, as shown in FIG. 2, the polymer sorbent has moisture absorption performance higher than that of the silica gel type A and the silica gel type B in a range from low humidity to high humidity.

FIG. 3 is a graph showing a range of a regeneration temperature for the polymer sorbent. FIG. 3 also shows ranges of the regeneration temperature for silica gel, activated carbon, and zeolite as comparative examples. As shown in FIG. 3, in the present embodiment, the polymer sorbent desorbs the adsorbed water vapor at a regeneration temperature of 40°C or higher and 100°C or lower. The polymer sorbent has a regeneration temperature lower than that of zeolite, activated carbon, and silica gel, and can be regenerated at a low temperature.

A content of the polymer sorbent in the thermal insulator 50 will be described. The content of the polymer sorbent with respect to the thermal insulator 50 can be set based on thermal insulation performance and moisture absorption performance required for the thermal insulator 50 in consideration of the moisture absorption performance of the polymer sorbent, water resistance and corrosion resistance of an object to be thermally insulated, a temperature range in which the object to be thermally insulated can change, a porosity of the thermal insulator 50, and the like. For example, the higher moisture absorption performance of the contained polymer sorbent allows for reducing the content of the polymer sorbent more, and the thermal insulation performance of the thermal insulator 50 can be enhanced more by increasing the content of the thermal insulation material. When the object to be thermally insulated has low water resistance or corrosion resistance, or when the porosity of the thermal insulator 50 or the porosity between the thermal insulator 50 and the object to be thermally insulated is high, from the viewpoint of avoiding dew condensation and retention of liquid water, the higher content of the polymer sorbent is preferable.

In the present embodiment, the polymer sorbent has moisture absorption performance of 45.3% RH at 35°C, which is a lower limit of the temperature of the circulation pipe 40, and the polymer sorbent is in a completely dry state at 70°C, which is an upper limit of the temperature of the circulation pipe 40, that is, 0% RH. The moisture absorptivity of the polymer sorbent at other temperatures is 34.5% RH at 40°C, 26.6% RH at 45°C, and 20.6% RH at 50°C. In the present embodiment, the content of the polymer sorbent can be set at a volume ratio of less than 1% with respect to the thermal insulator 50 from the viewpoint of improving the thermal insulation performance and providing sufficient dehumidification performance for the circulation pipe 40 as an object to be thermally insulated. More specifically, the polymer sorbent is set at a volume ratio of 0.05% with respect to the thermal insulator 50. From the viewpoint of improving the thermal insulation performance, the content of the polymer sorbent is preferably small as long as the moisture absorption performance of the thermal insulator 50 is not impaired.

A method for setting the volume ratio of the polymer sorbent in the thermal insulator 50 according to the present embodiment will be described. A theoretical value of a saturated water vapor amount (g/m³) in the atmosphere is 197 g/m³ at 70°C and 39.6 g/m³ at 35°C. Therefore, a maximum amount of desorption of moisture generated in a temperature range of 70°C to 35°C in the circulation pipe 40 is 157.4 g/m³, which is obtained by subtracting 39.6 g/m³ from 197 g/m³. In the present embodiment, the filling rate of the thermal insulation material and the polymer sorbent in the thermal insulator 50 is 80%, that is, the porosity is 20%, and thus, a maximum amount of water vapor that the polymer sorbent should absorb is 31.5 g/m³, which is obtained by multiplying 157.4 g/m³ by 20%. The moisture absorption performance of the polymer sorbent is 45.3% RH at 35°C, and thus, a maximum amount of the polymer sorbent required to absorb liquid water generated in voids of the thermal insulator 50 due to a temperature drop from 70°C to 35°C is 69.5 g/m³, which is obtained by dividing 45.3% RH from 31.5 g/m³. Here, a density of the polymer sorbent in the present embodiment is 1130 kg/m³. Thus, the maximum amount of the polymer sorbent required to absorb the water vapor generated due to the temperature drop from 70°C to 35°C is 6.15 e⁻⁵m³ in terms of volume. That is, 6.15 e⁻⁵m³ of the polymer sorbent is required per 1 m³ of the thermal insulator 50. Therefore, by containing the polymer sorbent such that the volume ratio of the polymer sorbent to the thermal insulator 50 is 0.00615% or more, the thermal insulator 50 can absorb all the water vapor that may be generated due to the temperature drop from 70°C to 35°C. However, in order to improve the moisture absorption performance of the thermal insulator 50 and increase a probability that the polymer sorbent is in contact with the water vapor in the voids of the thermal insulator 50, the polymer sorbent may be contained more than the theoretical value. For example, for the content of the polymer sorbent, a volume ratio of the polymer sorbent with respect to the thermal insulator 50 when it is assumed that the porosity of the thermal insulator 50 is 100% (0.03075% in the present embodiment), or a volume ratio calculated using the maximum amount of the polymer sorbent required to absorb water vapor (e.g., 564 g/m³) generated due to a temperature drop from 99°C to 0°C can be used. In addition, the volume ratio of the polymer sorbent to the thermal insulator is not limited to less than 1%, and may be less than 10%, and may be set to any volume ratio such as 10% to 80% in consideration of the types of the thermal insulation material and the polymer sorbent, and the thermal insulation performance and the moisture absorption performance required for the thermal insulator 50.

As described above, the thermal insulator 50 of the present embodiment includes a polymer sorbent that regenerates by desorbing adsorbed moisture and a thermal insulation material. The thermal insulator 50 can adsorb moisture between the circulation pipe 40 and the thermal insulator 50 by the sorption of the polymer sorbent under low temperature conditions where dew condensation may occur. This allows to reduce or prevent retention of water droplets on the outer circumference of the circulation pipe 40 or the thermal insulator 50, and allows to reduce or prevent deterioration of the circulation pipe 40. In addition, it allows reduce or prevent deterioration of the thermal insulation performance due to the presence of liquid water on the outer circumference of the circulation pipe 40. The polymer sorbent is regenerated due to the temperature rise of the circulation pipe 40. Thus, when the circulation pipe 40 is in a high temperature state, the polymer sorbent can be regenerated. And this allows for providing the thermal insulator 50 that has the thermal insulation performance due to the thermal insulation material and can repeatedly adsorb liquid water outside the circulation pipe 40. In addition, the heat of vaporization due to the release of moisture during regeneration can be used to cool the thermal insulator 50, and the thermal insulation performance of the thermal insulator 50 can be improved.

The thermal insulator 50 of the present embodiment is formed of a mixture obtained by mixing a granular polymer sorbent and a granular thermal insulation material. This allows for improving the filling rate of the thermal insulator 50, improving the thermal insulation performance, and reducing the amount of liquid water generated by dew condensation, and deterioration of the circulation pipe 40 can be more reliably prevented. The shape of the thermal insulator 50 can be easily changed, and the degree of freedom in disposing the thermal insulator 50 can be improved.

According to the thermal insulator 50 of the present embodiment, the polymer sorbent has a regeneration temperature at which the adsorbed moisture is desorbed, of 40°C or higher and 100°C or lower. The polymer sorbent can be regenerated at a temperature lower than that of other absorbents such as silica gel and zeolite. Thus, it allows for providing the thermal insulator 50 suitable for thermally insulating an object whose temperature change is 100°C or less.

According to the thermal insulator 50 of the present embodiment, the polymer sorbent contains a crosslinked polyacrylate. Known materials can be used to provide the thermal insulator 50 containing a polymer sorbent regenerated at a low temperature.

According to the thermal insulator 50 of the present embodiment, a volume ratio of the polymer sorbent to a thermal insulation layer is less than 1%. Setting a low volume ratio with respect to the thermal insulation material allows for providing the thermal insulator 50 capable of having sufficient thermal insulation performance and reducing or preventing deterioration of the circulation pipe 40.

According to the thermal insulator 50 of the present embodiment, an aerogel having water repellency is used as the thermal insulation material. Using the aerogel allows for high thermal insulation performance with a simple method. The thermal insulation material has water repellency, and thus, liquid water can be smoothly guided to the polymer sorbent, and the moisture absorption performance of the thermal insulator 50 can be improved.

According to the thermal insulator 50 of the present embodiment, the aerogel contains polymethylsilsesquioxane. This allows for providing the thermal insulator 50 having a thermal conductivity lower than a thermal conductivity of a general thermally insulating material (20 mW·m⁻¹·K⁻¹ to 40 mW·m⁻¹·K⁻¹). Productivity can be improved compared to a silica aerogel, which is obtained by using supercritical drying.

### B: Other Embodiments:

(B 1) In the above embodiment, an example is given in which the thermal insulation material is a polymethylsilsesquioxane aerogel. The thermal insulation material may be a polymethylsilsesquioxane-cellulose nanofiber (PMSQ-CNF) composite aerogel that further contains cellulose nanofibers (CNF) in the polymethylsilsesquioxane aerogel. According to the thermal insulator 50 of this form, the thermal insulator 50 having a thermal conductivity (15 mW·m⁻¹·K⁻¹ ) lower than that of a general thermally insulating material and having reversible elastic deformation and bending flexibility against uniaxial compression, can be obtained.

(B2) In the above embodiment, an example is given in which the thermal insulator 50 is mounted to the outer circumference of the circulation pipe 40 as an object to be thermally insulated. In contrast, the thermal insulator 50 is not limited to being mounted to the circulation pipe 40, and may be mounted and used to other heat sources such as appliances such as stoves, refrigerators, freezers, and water heaters, and metal appliances that can reach a high temperature. In addition to industrial uses, the thermal insulator 50 may be used for building uses, for example, for building materials such as glass and walls of houses and buildings. In addition, the thermal insulator 50 is not limited to being disposed outside of the object, and may be disposed, for example, inside the object, such as an inner circumference of the circulation pipe 40.

(B3) In the above embodiment, an example is given in which the thermal insulation material is an aerogel. As the thermal insulation material, thermally insulating materials other than the aerogel, such as a ceramic fiber, a cellulose fiber, a urethane foam, a phenol foam, an expanded polystyrene, and glass wool, may be used. In this case, the thermal insulator 50 may be, for example, a so-called blanket type in which a polymer sorbent is contained in fibrous glass wool as a thermal insulation material.

(B4) In the above embodiment, an example is given in which the thermal insulation material is a polymethylsilsesquioxane aerogel. As the aerogel, for example, inorganic aerogels such as a silica aerogel, a carbon aerogel, and an alumina aerogel may be used, and other aerogels formed using glass, a synthetic resin, or a fiber structure made of a composite material of the above as a base material may also be used. The thermal insulation material in each of the above embodiments is prepared by forming a thermal insulation sheet, which is produced by supporting a silica aerogel on fibers made of a carbon fiber or a synthetic resin, into a cylindrical shape corresponding to the shape of the circulation pipe 40. The thermal insulation material may be prepared by impregnating a resin sheet such as a cylindrical glass fiber sheet or a non-woven fabric sheet with an aerogel.

The present disclosure is not limited to the embodiments described above, and can be implemented in various configurations without departing from the scope of the present disclosure. For example, the technical features in the embodiments corresponding to the technical features in the forms described in "Summary of Invention" can be appropriately replaced or combined in order to solve a part or all of the problems described above or in order to achieve a part or all of the effects described above. Any of the technical features may be omitted as appropriate unless the technical feature is described as essential herein.

The present application is based on a Japanese Patent Application No. 2020-185507 filed on November 6, 2020, the content which is incorporated herein as reference.

### REFERENCE SIGNS LIST

- 30: flow path
- 40: circulation pipe
- 50: thermal insulator
- 60: protective layer

## Claims

1. A thermal insulator comprising:
a polymer sorbent that regenerates by desorbing adsorbed moisture; and
a thermal insulation material.

2. The thermal insulator according to claim 1, wherein at least one selected from the group consisting of the polymer sorbent and the thermal insulation material is granular.

3. The thermal insulator according to claim 1 or 2, wherein the polymer sorbent has a regeneration temperature at which the adsorbed moisture is desorbed of 40°C or higher and 100°C or lower.

4. The thermal insulator according to claim 3, wherein the polymer sorbent contains a crosslinked polyacrylate.

5. The thermal insulator according to any one of claims 1 to 4, wherein a volume ratio of the polymer sorbent to the thermal insulator is less than 1%.

6. The thermal insulator according to any one of claims 1 to 5, wherein the thermal insulation material is an aerogel having water repellency.

7. The thermal insulator according to claim 6, wherein the aerogel contains polymethylsilsesquioxane.
